# EUROPÄISCHE PATENTSCHRIFT

(11) **EP 3 117 086 B1**
(45) Veröffentlichungstag und Bekanntmachung des Hinweises auf die Patenterteilung: **28.02.2018**
(21) Anmeldenummer: 15709901.1
(22) Anmeldetag: 11.03.2015
(51) Int. Cl.: F02D 41/00, F02D 41/24

(54) **KRAFTFAHRZEUG, STEUERGERÄT UND VERFAHREN ZUM STEUERN EINER PHASENLAGE EINER NOCKENWELLE**
MOTOR VEHICLE, CONTROL UNIT AND METHOD FOR CONTROLLING A PHASE ANGLE OF A CAMSHAFT
VÉHICULE AUTOMOBILE, APPAREIL DE COMMANDE ET PROCÉDÉ DE COMMANDE D'UNE POSITION DE PHASE D'UN ARBRE À CAMES

(30) Priorität: 12.03.2014 DE 102014204492
(43) Veröffentlichungstag der Anmeldung: 18.01.2017
(73) Patentinhaber: Volkswagen Aktiengesellschaft, 38440 Wolfsburg (DE)
(72) Erfinder: HOFFMEYER, Henrik, 30161 Hannover (DE); PETERSEN, Lars, 38536 Meinersen (DE); SCHWIEGER, Stephan, 38104 Braunschweig (DE)
(86) Internationale Anmeldenummer: PCT/EP2015/055089
(87) Internationale Veröffentlichungsnummer: WO 2015/135995

(56) Entgegenhaltungen:
- DE-A1-102005 035 239
- DE-T2- 60 128 997
- US-A- 5 609 126

## Beschreibung

Die Erfindung betrifft allgemein ein Steuergerät zum Steuern einer Phasenlage einer ersten Nockenwelle einer Verbrennungskraftmaschine, ein Kraftfahrzeug mit einem solchen Steuergerät und ein Verfahren zum Steuern einer Phasenlage einer ersten Nockenwelle einer Verbrennungskraftmaschine.

Ein Reaktionsverhalten einer Verbrennungskraftmaschine auf Änderungen der angeforderten Motorleistung oder des angeforderten Drehmoments lässt sich mittels einer dynamischen Steuerung der Phasenlage einer Nockenwelle verbessern. Während sportlich orientierte Kraftfahrzeugnutzer eine möglichst hohe Ansprechdynamik des Antriebsaggregats ihres Kraftfahrzeugs schätzen, kann es auch wichtige Gründe geben, ein bestmögliches Ansprechverhalten des Antriebsaggregats nicht immer voll auszuschöpfen. Für eine bewusste Drosselung einer bestmöglichen Ansprechdynamik des Antriebsaggregats eines Kraftfahrzeugs können unter anderem folgende Gründe sprechen. Beispielsweise kann es sein, dass von bestimmten Fahrzeugnutzern oder für bestimmte Fahrzeugnutzer oder unter bestimmten Wetterbedingungen eine defensive Fahrweise angestrebt wird. Auch kann eine Drosselung der Ansprechdynamik des Antriebsaggregats infolge eines niedrigeren Treibstoffverbrauchs je gefahrenen Kilometer, eines geringeren Schadstoffausstoßes und eines geringeren Verschleißes von Fahrzeugteilen zu einer Schonung von Ressourcen beitragen. Des Weiteren ist es vorstellbar, dass aufgrund gesetzlicher Bestimmungen oder aufgrund eines Produkt- oder Vertriebskonzeptes eine besonders hohe Ansprechdynamik des Antriebsaggregats bestimmten Fahrzeugnutzern und/oder bestimmten Fahrzeugkonfigurationen vorbehalten bleiben soll. Folglich besteht ein Bedarf für eine technische Lösung, mit der eine Ansprechdynamik einer Verbrennungskraftmaschine in verlässlicher Weise konfigurierbar oder einstellbar ist.

Die DE 10 2011 088 403 B3 beschreibt ein Verfahren zum Bestimmen eines Werts für einen Ventilhub eines individuellen Zylinders einer Brennkraftmaschine mit mehreren Zylindern.
Die US 5 609 126 A beschreibt ein Verfahren zur variablen Ventilsteuerung in dem Einlass- und Auslass-Steuerzeiten in Abhängigkeit von Drehzahl und Drosselklappenstellung ermittelt werden.
Die DE 10 2005 035 239 A1 beschreibt ein Verfahren zum Einstellen eines Zündwinkels, in dem eine Restgasrate ermittelt wird.
Die DE 10 2004 039 216 A1 beschreibt ein Verfahren zum Steuern einer Brennkraftmaschine mit einer Nockenwelle, die auf Gaswechselventile einwirkt. Zum Steuern eines Stellglieds einer Phasen-Verstelleinrichtung wird ein Korrekturwert für eine Phase zwischen der Nockenwelle und einer Kurbelwelle mittels eines iterativen numerischen Optimierungsverfahrens ermittelt,
das Messdatensätze nutzt. In jedem der Messdatensätze ist unter anderem auch je ein Wertefeld für Drehzahl und Saugrohrdruck vorgesehen. Das Optimierungsverfahren ist rechenaufwändig und in seiner Wirkungsweise unübersichtlich, so dass eine Einstellung der Ansprechdynamik der Brennkraftmaschine schwierig ist.

Es ist daher eine Aufgabe der vorliegenden Erfindung, ein Steuergerät, ein Kraftfahrzeug und/oder ein Verfahren zum Steuern einer Phasenlage einer Nockenwelle bereitzustellen, das die oben genannten Nachteile wenigstens teilweise überwindet.

Diese Aufgabe wird durch ein erfindungsgemäßes Steuergerät nach Anspruch 1, ein Kraftfahrzeug nach Anspruch 11 und ein Verfahren zum Steuern einer Phasenlage einer Nockenwelle nach Anspruch 12 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Das erfindungsgemäße Steuergerät zum Steuern einer Phasenlage einer ersten Nockenwelle einer Verbrennungskraftmaschine weist einen ersten Kennfeldgeber zum Ermitteln einer dynamischen Soll-Phasenlage der ersten Nockenwelle und einen zweiten Kennfeldgeber zum Ermitteln einer statischen Soll-Phasenlage der ersten Nockenwelle auf. Außerdem weist das Steuergerät einen ersten Interpolator zum Ermitteln einer korrigierten Soll-Phasenlage der ersten Nockenwelle auf Grundlage der von dem ersten Kennfeldgeber ermittelten dynamischen Soll-Phasenlage der ersten Nockenwelle und einer von dem zweiten Kennfeldgeber ermittelten statischen Soll-Phasenlage der ersten Nockenwelle auf.

Die erste Nockenwelle kann eine Einlassnockenwelle zur Betätigung von Einlassventilen oder eine Auslassnockenwelle zur Betätigung von Auslassventilen oder eine gemeinsame Nockenwelle zur gleichzeitigen Betätigung von Einlass- und Ausgangsventilen einer Verbrennungskraftmaschine sein. Typischerweise ist die Verbrennungskraftmaschine ein Antriebsaggregat eines Fahrzeugs. Das Fahrzeug kann ein Landfahrzeug, ein Wasserfahrzeug oder ein Luftfahrzeug sein. Das Landfahrzeug kann beispielsweise ein Personenkraftwagen, ein Lastkraftwagen oder ein Bus sein. Die Verbrennungskraftmaschine kann ein Ottomotor oder ein Dieselmotor sein. Sie kann einen Turbolader aufweisen, eine beliebige Anzahl von Zylinder, z.B. drei, vier, fünf, sechs, acht oder 12, usw. Die Phasenlage der Nockenwelle ist einstellbar, wie es generell bekannt ist, um die Steuerzeiten von Ein- bzw. Auslassventilen der Verbrennungskraftmaschine zu verändern, wie es ebenfalls im Stand der Technik bekannt ist. Die Verbrennungskraftmaschine weist entsprechend eine variable Ventilsteuerung auf, die über die Phasenlage der Nockenwelle gesteuert wird.

Mit Kennfeldgeber wird hier eine elektronische (hydraulische, pneumatische oder mechanische) Schaltung bezeichnet, die dazu eingerichtet ist, mindestens zwei Eingangsgrößen (beispielsweise Drehzahlinformation und Saugrohrdruckinformation) zu empfangen und zu aktuell eingegebenen Kombinationen von Eingangsgrößen (d.h. zu Vektoren mit mindestens zwei Eingangsgrößen) jeweils einen Ausgabewert entsprechend eines Kennfelds des Kennfeldgebers auszugeben. Für die Eingabe der Eingangsgrößen und die Ausgabe der Ausgangsgrößen kann der Kennfeldgeber jeweils digitale (und/oder analoge) Eingangs- und Ausgangsschnittstellen aufweisen.

Das Steuergerät kann einen oder mehrere Prozessoren oder dergleichen aufweisen, in welche die hierin beschriebenen Funktionen implementiert sind.

Ein Konzept der Erfindung kann darin gesehen werden, dass zwischen einer dynamischen Soll-Phasenlage der ersten Nockenwelle und einer statischen Soll-Phasenlage der ersten Nockenwelle interpoliert wird.

Die dynamische Soll-Phasenlage der ersten Nockenwelle wird über ein erstes Kennfeld ermittelt, das hinsichtlich eines Ansprechverhaltens der Verbrennungskraftmaschine, d.h. hinsichtlich einer maximalen Drehmomentabgabe optimiert ist, weswegen hier auch der Begriff "dynamisch" verwendet wird. Bei der dynamischen Soll-Phasenlage der ersten Nockenwelle werden folglich die Ein- und/oder Auslassventile der Verbrennungskraftmaschine derart gesteuert, dass die Verbrennungskraftmaschine ein maximales Drehmoment bereitstellt.

Die statische Soll-Phasenlage der ersten Nockwelle wird aus einem zweiten Kennfeld ermittelt, das hinsichtlich eines optimalen Wirkungsgrades der Verbrennungskraftmaschine optimiert ist. Bei der statischen Soll-Phasenlage der ersten Nockenwelle werden die Ein- und/oder Auslassventile der Verbrennungskraftmaschine derart gesteuert, dass die Verbrennungskraftmaschine mit einem hohen, insbesondere maximalen, Wirkungsgrad betrieben wird.

Unter einem maximalen Drehmoment ist hier nicht ausschließlich ein theoretisch mögliches maximales Drehmoment zu verstehen, sondern das Drehmoment, welches mit dem ersten (dynamischen, drehmomentoptimierten) Kennfeld erzielt wird und welches typischerweise höher ist, als das Drehmoment, welches die Verbrennungskraftmaschine bereitstellt, wenn sie mit dem zweiten (statischen, verbrauchsoptimierten) Kennfeld betrieben wird.

Durch die Interpolation zwischen der dynamischen und der statischen Soll-Phasenlage kann die Phasenlage der Nockenwelle von einer statischen Soll-Phasenlage hin zu einer dynamischen Phasenlage "verschoben" werden, wenn z.B. erkannt wird, dass das Kraftfahrzeug beschleunigen soll und daher die Verbrennungskraftmaschine entsprechend Drehmoment bereitstellen soll.

Die Ermittlung einer korrigierten Soll-Phasenlage, die z.B. einem Beschleunigungswunsch und der damit einhergehenden Drehmomentanforderung Rechnung trägt, geschieht durch eine Interpolation zwischen der statischen und der dynamischen Soll-Phasenlage der ersten Nockenwelle.

Die Interpolation kann bei manchen Ausführungsformen durch Ermittlung eines Mittelwertes zwischen der statischen und der dynamischen Soll-Phasenlage der ersten Nockenwelle geschehen, was sehr einfach ist.

Die Interpolation kann aber auch auf Grundlage eines Interpolationsfaktors durchgeführt werden. Dementsprechend ist bei manchen Ausführungsformen der erste Interpolator dazu eingerichtet, die korrigierte Soll-Phasenlage der ersten Nockenwelle auf Grundlage eines Interpolationsfaktor zu ermitteln, wobei der Interpolationsfaktor nicht fest sein muss, sondern veränderbar sein kann und beispielsweise zwischen 0 und 1 liegen kann. Mit einem veränderbaren Interpolationsfaktor kann eine Ansprechdynamik eines Antriebsaggregats, das die Verbrennungskraftmaschine mit der ersten Nockenwelle aufweist, in Abhängigkeit von bestimmten Betriebsparametern, wie zum Beispiel in Abhängigkeit einer Füllungsabweichung eines Zylinders der Verbrennungskraftmaschine und/oder einer Drehzahl der Verbrennungskraftmaschine (im Folgenden auch "Motordrehzahl" genannt) erreicht werden.

Bei manchen Ausführungsformen wird der Interpolationsfaktor auch auf Grundlage eines gewünschten Soll-Drehmoments der Verbrennungskraftmaschine ermittelt. Dazu wird ein Ist-Drehmoment der Verbrennungskraftmaschine ermittelt und der Interpolationsfaktor derart bestimmt, dass durch die Veränderung der Steuerung der ersten Nockenwelle das Soll-Drehmoment erreicht wird. Dabei kann der Interpolationsfaktor zwischen 0 und 1 liegen, wobei mit "1" die größte Differenz zwischen Ist-Drehmoment und Soll-Drehmoment angegeben wird. Sobald das Soll-Drehmoment erreicht ist, kann die Phasenlage der ersten Nockenwelle wieder auf Grundlade des stationären Kennfeldes gesteuert werden.

Bei manchen Ausführungsformen weist das Steuergerät einen dritten Kennfeldgeber zum Ermitteln des Interpolationsfaktors unter Berücksichtigung der Motordrehzahl und einer Füllungsabweichung eines Zylinders auf, wobei der Kennfeldgeber den Interpolationsfaktor aus einem dritten Kennfeld ermittelt. Hierdurch kann ein Beschleunigungs- oder Drehzahländerungsverhalten der Verbrennungskraftmaschine eingestellt oder beeinflusst werden. Die Füllungsabweichung kann sowohl positive als auch negative Werte annehmen.

Bei manchen Ausführungsformen weist das Steuergerät zusätzlich folgende Komponenten auf: einen vierten Kennfeldgeber zum Ermitteln einer dynamischen Soll-Phasenlage einer zweiten Nockenwelle (z.B. einer Auslassnockenwelle, wenn die erste Nockenwelle eine Einlassnockenwelle ist) der Verbrennungskraftmaschine, und einen zweiten Interpolator zum Ermitteln einer korrigierten Soll-Phasenlage der zweiten Nockenwelle unter Berücksichtigung der von dem vierten Kennfeldgeber ermittelten dynamischen Soll-Phasenlage der zweiten Nockenwelle und einer von einem fünften Kennfeldgeber ermittelten statischen Soll-Phasenlage der zweiten Nockenwelle.

Hierdurch kann auch für eine zweite Nockenwelle eine von einem Betriebszustand der Verbrennungskraftmaschine abhängige optimale dynamische Soll-Phasenlage der zweiten Nockenwelle ermittelt werden. Wenn die erste Nockenwelle eine Einlassnockenwelle zur Betätigung von Einlassventilen ist, kann die zweite Nockenwelle beispielsweise eine Auslassnockenwelle zur Betätigung von Auslassventilen der Verbrennungskraftmaschine oder eine gemeinsame Nockenwelle zur gleichzeitigen Betätigung von Einlass- und Ausgangsventilen sein. Wenn die erste Nockenwelle eine Auslassnockenwelle zur Betätigung von Auslassventilen ist, kann die zweite Nockenwelle beispielsweise eine Einlassnockenwelle zur Betätigung von Einlassventilen der Verbrennungskraftmaschine oder eine gemeinsame Nockenwelle zur gleichzeitigen Betätigung von Einlass- und Ausgangsventilen der Verbrennungskraftmaschine sein.

Bei manchen Ausführungsformen weist das Steuergerät zusätzlich folgende Komponenten auf: einen sechsten Kennfeldgeber zum Ermitteln eines dynamischen Soll-Zündwinkels der Verbrennungskraftmaschine und einen dritten Interpolator zum Ermitteln eines korrigierten Soll-Zündwinkels unter Berücksichtigung des von dem sechsten Kennfeldgeber ermittelten dynamischen Soll-Zündwinkels und einem von einem siebten Kennfeldgeber ermittelten statischen Soll-Zündwinkel der Verbrennungskraftmaschine. Hierdurch kann auch ein von einem Betriebszustand der Verbrennungskraftmaschine abhängiger optimaler dynamischer Soll-Zündwinkel ermittelt werden.

Bei manchen Ausführungsformen ist der der zweite Interpolator dazu eingerichtet ist, beim Ermitteln der korrigierten Soll-Phasenlage der zweiten Nockenwelle den Interpolationsfaktor zu berücksichtigen. Unabhängig davon kann es zweckmäßig sein, wenn der dritte Interpolator dazu eingerichtet ist, beim Ermitteln des korrigierten Soll-Zündwinkels den Interpolationsfaktor zu berücksichtigen. Jede der beiden vorgenannten Maßnahmen ist geeignet, eine Ansprechdynamik der Verbrennungskraftmaschine einzustellen oder zu beeinflussen, z.B. auch in Abhängigkeit einer Drehmomentanforderung.

Bei manchen Ausführungsformen ist der erste und/oder der zweite und/oder der vierte und/oder der fünfte und/oder der sechste und/oder der siebte Kennfeldgeber dazu eingerichtet ist, den von ihm jeweils bereitgestellten Ausgabewert unter Berücksichtigung einer Motordrehzahl und eines Saugrohrdrucks zu ermitteln. Wertepaare von Motordrehzahl und Saugrohrdruck sind dazu geeignet, Betriebszustände einer Verbrennungskraftmaschine voneinander zu unterscheiden und von dieser Unterscheidung abhängige optimale statische und dynamische Soll-Phasenlagen von Nockenwellen und von dieser Unterscheidung abhängige optimale statische und dynamische Soll-Zündwinkel zu ermitteln.

Bei manchen Ausführungsformen ist das Steuergerät dazu eingerichtet ist, den Interpolationsfaktor und/oder ein erstes Kennfeld des ersten Kennfeldgebers und/oder ein zweites Kennfeld des zweiten Kennfeldgebers und/oder ein drittes Kennfeld des dritten Kennfeldgebers und/oder ein viertes Kennfeld des vierten Kennfeldgebers und/oder ein fünftes Kennfeld des fünften Kennfeldgebers und/oder ein sechstes Kennfeld des sechsten Kennfeldgebers und/oder ein siebtes Kennfeld des siebten Kennfeldgebers in Abhängigkeit von einem motortyp- oder fahrzeugtypabhängigen Parameter auszuwählen. Hierdurch kann die Steuerung so eingerichtet werden, dass sie sich für eine Verwendung für unterschiedliche Typen von Verbrennungskraftmaschinen oder in unterschiedlichen Typen von Fahrzeugen oder Fahrzeugkonfigurationen eignet. Der motortypabhängige Parameter kann bspw. charakteristisch für einen Typ einer Verbrennungskraftmaschine sein, der bspw. durch den Hubraum, die Art oder Anzahl von Ein- bzw. Auslassventilen, das Vorhandensein eines Turboladers, usw. definiert ist. Ähnliches gilt für den fahrzeugtypabhängigen Parameter, der bspw. charakteristisch für entsprechende Kenndaten ist, die für die Steuerung der Verbrennungskraftmaschine relevant sind.

Ein erfindungsgemäßes Verfahren zum Steuern einer Phasenlage einer ersten Nockenwelle einer Verbrennungskraftmaschine umfasst folgende Schritte: Ermitteln einer dynamischen Soll-Phasenlage der ersten Nockenwelle, z.B. mittels eines ersten Kennfeldgebers, Ermitteln einer statischen Soll-Phasenlage der ersten Nockenwelle, z.B. mittels eines zweiten Kennfeldgebers, und Ermitteln einer korrigierten Soll-Phasenlage der ersten Nockenwelle mittels Interpolation zwischen der ermittelten dynamischen Soll-Phasenlage der ersten Nockenwelle und der ermittelten statischen Soll-Phasenlage der ersten Nockenwelle.

Bei manchen Ausführungsformen umfasst das Verfahren auch andere Schritte, wie sie oben ausgeführt wurden.

Das Verfahren kann bei manchen Ausführungsformen von einem Steuergerät ausgeführt werden, wie es oben beschrieben wurde.

Ausführungsbeispiele der Erfindung werden nun beispielhaft und unter Bezugnahme auf die beigefügte Zeichnung beschrieben, in der zeigen:
- Fig. 1: schematisch ein Ausführungsbeispiel eines Steuergeräts zum Steuern einer Phasenlage einer ersten Nockenwelle und einer Phasenlage einer zweiten Nockenwelle und eines Zündwinkels einer Verbrennungskraftmaschine;
- Fig. 2: schematisch einen Ablauf eines Verfahrens zum Steuern einer Nockenwelle einer Verbrennungskraftmaschine.

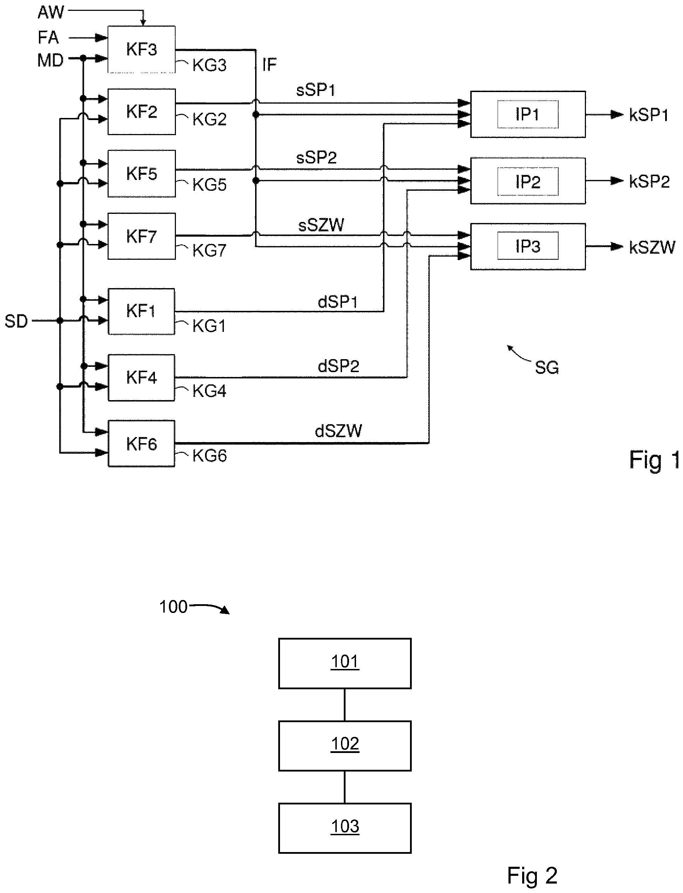

Das in Fig. 1 gezeigte Steuergerät SG zum Steuern einer Phasenlage einer ersten Nockenwelle, die hier eine Einlassnockenwelle ist, und einer Phasenlage einer zweiten Nockenwelle, die hier eine Auslassnockenwelle ist, und eines Zündwinkels einer Verbrennungskraftmaschine umfasst einen ersten Kennfeldgeber KG1 zum Ermitteln einer dynamischen Soll-Phasenlage dSP1 der ersten Nockenwelle. Der erste Kennfeldgeber KG1 weist eine Eingangsschnittstelle zur Aufnahme eines aktuellen Motordrehzahlwerts MD und zur Aufnahme eines aktuellen Saugrohrdruckwerts SD der Verbrennungskraftmaschine auf. Der erste Kennfeldgeber KG1 ist dazu eingerichtet, aus diesen Werten MD, SD eine dynamische Soll-Phasenlage dSP1 einer Einlassnockenwelle zu ermitteln.

Außerdem umfasst das Steuergerät SG einen zweiten Kennfeldgeber KG2, einen dritten Kennfeldgeber KG3, einen vierten Kennfeldgeber KG4, einen fünften Kennfeldgeber KG5, einen sechsten Kennfeldgeber KG6 und einen Kennfeldgeber siebten KG7 Kennfeldgeber. Jeder der Kennfeldgeber KG1, KG2 und K4 bis KG7 weist ein ihm zugeordnetes eigenes Kennfeld KF1, KF2, K4, ..., KF7 auf. Der zweite KG2, vierte KG4, fünfte KG5, sechste KG6 und siebte KG7 Kennfeldgeber weist jeweils eine Eingangsschnittstelle zur Aufnahme eines aktuellen Motordrehzahlwerts MD und zur Aufnahme eines aktuellen Saugrohrdruckwerts SD der Verbrennungskraftmaschine auf.

Der zweite Kennfeldgeber KG2 ist dazu eingerichtet, aus diesen Werten MD, SD eine statische Soll-Phasenlage sSP1 der Einlassnockenwelle zu ermitteln. Der vierte Kennfeldgeber KG4 ist dazu eingerichtet, aus diesen Werten MD, SD eine dynamische Soll-Phasenlage dSP2 einer Auslassnockenwelle zu ermitteln. Der fünfte Kennfeldgeber KG5 ist dazu eingerichtet, aus diesen Werten MD, SD eine statische Soll-Phasenlage sSP2 der Auslassnockenwelle zu ermitteln. Der sechste Kennfeldgeber KG6 ist dazu eingerichtet, aus diesen Werten MD, SD einen dynamischen Soll-Zündwinkel dSZW zu ermitteln. Der siebte Kennfeldgeber KG7 ist dazu eingerichtet, aus diesen Werten MD, SD einen statischen Soll-Zündwinkel sSZW zu ermitteln.

Außerdem umfasst das Steuergerät SG einen dritten Kennfeldgeber KG3 zum Ermitteln des Interpolationsfaktors IF. Der dritte Kennfeldgeber KG3 weist eine Eingangsschnittstelle zur Aufnahme eines aktuellen Motordrehzahlwerts MD und zur Aufnahme einer aktuellen Füllungsabweichung FA der Verbrennungskraftmaschine auf. Der dritte Kennfeldgeber KG3 ist dazu eingerichtet, aus diesen Werten anhand seines in ihm gespeicherten Kennfeldes KF3 den Interpolationsfaktor IF zu ermitteln.

Jeder der Kennfeldgeber KG1 bis KG7 kann jeweils eine (in den Figuren nicht dargestellte) analoge und/oder digitale elektronische Schaltung aufweisen. Die digitale Schaltung des jeweiligen Kennfeldgebers kann beispielsweise einen Mikroprozessor und eine ihm individuell zugeordnete Kennfeldtabelle KF1 bis KF7 umfassen. Die jeweilige Kennfeldtabelle kann in einer Datenbank abrufbar abgelegt sein. In den Kennfeldtabellen KF1, KF2 und KF4 bis KF7 (oder in der zugehörigen Datenbank) können mögliche Motordrehzahlwerte und Saugrohrdrücke Schlüsselwerte darstellen, mittels derer ein schnelles Auffinden eines passenden Datensatzes erfolgen kann (beispielsweise mittels binärer Suche). Für das dritte Kennfeld KF3 gilt das Entsprechende hinsichtlich Motordrehzahlwerten MD und Füllungsabweichungen FA.

Des Weiteren umfasst das Steuergerät SG einen ersten Interpolator IP1. Der erste Interpolator IP1 weist eine Eingangsschnittstelle zur Aufnahme folgender Werte auf: Interpolationsfaktor IF, statische Soll-Phasenlage sSP1 für die Einlassnockenwelle, die dynamische Soll-Phasenlage dSP1 der Einlassnockenwelle. Die dynamische Soll-Phasenlage dSP1 der Einlassnockenwelle wird von dem ersten Kennfeldgeber KG1 bereitgestellt. Die statische Soll-Phasenlage sSP1 der Einlassnockenwelle wird von dem zweiten Kennfeldgeber KG2 bereitgestellt. Der erste Interpolator IP1 ist dazu eingerichtet, aus diesen Werten eine korrigierte Soll-Phasenlage kSP1 der Einlassnockenwelle zu ermitteln.

Außerdem umfasst das Steuergerät SG einen zweiten Interpolator IP2. Der zweite Interpolator IP2 weist eine Eingangsschnittstelle zur Aufnahme folgender Werte auf: Interpolationsfaktor IF; statische Soll-Phasenlage sSP2 für die Auslassnockenwelle; die dynamische Soll-Phasenlage dSP2 der Auslassnockenwelle. Die dynamische Soll-Phasenlage dSP2 der Auslassnockenwelle wird von dem vierten Kennfeldgeber KG4 bereitgestellt. Die statische Soll-Phasenlage sSP2 der Auslassnockenwelle wird von dem fünften Kennfeldgeber KG5 bereitgestellt. Der zweite Interpolator IP2 ist dazu eingerichtet, aus diesen Werten eine korrigierte Soll-Phasenlage kSP2 der Auslassnockenwelle zu ermitteln.

Des Weiteren umfasst das Steuergerät SG einen dritten Interpolator IP3. Der dritte Interpolator IP3 weist eine Eingangsschnittstelle zur Aufnahme folgender Werte auf: Interpolationsfaktor IF; statischer Soll-Zündwinkel sSZW; dynamischer Soll-Zündwinkel dSZW. Der dynamische Soll-Zündwinkel dSZW wird von dem sechsten Kennfeldgeber KG6 bereitgestellt. Der statische Soll-Zündwinkel sSZW wird von dem siebten Kennfeldgeber KG7 bereitgestellt. Der dritte Interpolator IP3 ist dazu eingerichtet, aus diesen Werten einen korrigierten Soll-Zündwinkel kSZW für die Verbrennungskraftmaschine zu ermitteln.

Vorzugsweise weist der dritte Kennfeldgeber KG3 einen Auswahleingang AW auf. Der Auswahleingang AW dient dazu, den Interpolationsfaktor IF und/oder das erste Kennfeld KF1 des ersten Kennfeldgebers KG1 und/oder das zweite Kennfeld KF2 des zweiten Kennfeldgebers KG2 und/oder das dritte Kennfeld KF3 des dritten Kennfeldgebers KG3 und/oder das vierte Kennfeld KF4 des vierten Kennfeldgebers KG4 und/oder das fünfte Kennfeld KF5 des fünften Kennfeldgebers KG5 und/oder das sechste Kennfeld KF6 des sechsten Kennfeldgebers KG6 und/oder das siebte Kennfeld KF7 des siebten Kennfeldgebers KG7 in Abhängigkeit von einem motortyp- oder fahrzeugtypabhängigen Parameters oder in Abhängigkeit eines anderen Parameters auszuwählen.

Mittels des Auswahleingangs AW kann die Ansprechdynamik der Antriebsmaschine, die die Verbrennungskraftmaschine aufweist, in Abhängigkeit beispielsweise einer Belastbarkeit von Motor- oder Fahrzeugteilen, in Abhängigkeit einer aktuellen Beladung des Fahrzeugs, in Abhängigkeit einer Anhängerlast, in Abhängigkeit einer Belastbarkeit einer Nutzlast, in Abhängigkeit von Fahrer- und/oder Beifahrerwünschen und/oder in Abhängigkeit von produktgestalterischen Zielen manuell oder sensorgesteuert eingestellt werden. Eine sensorgesteuerte Einstellung der Ansprechdynamik kann beispielsweise unter Berücksichtigung einer Ausgabe eines Belastbarkeitssensors, einer Ausgabe eines Beladungssensors, einer Ausgabe eines Anhängerlastsensors, einer Ausgabe eines Nutzlastsensors, einer Ausgabe eines Fahrzeugtyperkennungssensors und/oder einer Ausgabe einer Personalisierungsfunktion für Fahrzeugnutzer und/oder Beifahrer erfolgen. Um Interessen einzelner Mitfahrer Rechnung zu tragen, kann es zweckmäßig sein, wenn von den gewünschten Ansprechdynamiken aller Mitfahrer (einschließlich Fahrer) die kleinste (d.h. die defensivste) gewünschte Ansprechdynamik ausgewählt und eingestellt wird. Ein entsprechendes Ansprechdynamik-Ermittlungskonzept kann über die Gesamtmenge oder über eine beliebige (echte) Teilmenge der vorgenannten Ausgaben angewendet werden.

Das in Fig. 2 gezeigte Verfahren 100 zum Steuern einer Phasenlage einer Nockenwelle einer Verbrennungskraftmaschine umfasst folgende Schritte. In einem ersten Schritt 101 wird eine dynamische Soll-Phasenlage dSP1 der ersten Nockenwelle mittels eines ersten Kennfeldgebers KG1 ermittelt, wie es auch oben im Zusammenhang mit Fig. 1 erläutert wurde.

In einem zweiten Schritt 102 wird von dem zweiten Kennfeldgeber KG2 eine statische Soll-Phasenlage sSP1 der ersten Nockenwelle ermittelt, wie es auch oben im Zusammenhang mit Fig. 1 erläutert wurde.

In einem dritten Schritt 103 wird eine korrigierte Soll-Phasenlage kSP1 der ersten Nockenwelle mittels Interpolation zwischen der von dem ersten Kennfeldgeber KG1 ermittelten dynamischen Soll-Phasenlage dSP1 der ersten Nockenwelle und der von dem zweiten Kennfeldgeber KG2 ermittelten statischen Soll-Phasenlage sSP1 der ersten Nockenwelle ermittelt. Die dynamische Soll-Phasenlage dSP1 der ersten Nockenwelle kann beispielsweise unter Berücksichtigung einer Motordrehzahl MD und eines Saugrohrdrucks SD ermittelt werden, wie es oben ausgeführt wurde. Gleiches gilt für die Ermittlung der statischen Soll-Phasenlage sSP1.

Vorzugsweise wird beim Ermitteln der korrigierten Soll-Phasenlage kSP1 der ersten Nockenwelle ein Interpolationsfaktor IF berücksichtigt. Der Interpolationsfaktor IF kann beispielsweise mittels eines dritten Kennfeldgebers KG3 unter Berücksichtigung der Motordrehzahl MD und einer Füllungsabweichung FA ermittelt werden, wie oben erläutert. Der Interpolationsfaktor IF und/oder das erste Kennfeld KF1 des ersten Kennfeldgebers KG1 und/oder das zweite Kennfeld KF2 des zweiten Kennfeldgebers KG2 und/oder das dritte Kennfeld KF3 des dritten Kennfeldgebers KG3 und/oder das vierte Kennfeld KF4 des vierten Kennfeldgebers KG4 und/oder das fünfte Kennfeld KF5 des fünften Kennfeldgebers KG5 und/oder das sechste Kennfeld KF6 des sechsten Kennfeldgebers KG6 und/oder das siebte Kennfeld KF7 des siebten Kennfeldgebers KG7 kann beispielsweise in Abhängigkeit von einem motortypabhängigen Parameter oder über eine Eingangsgröße des Auswahleingangs AW ausgewählt werden, wie oben ausgeführt.

Für die Eingabe der Motordrehzahlinformation, Saugrohrdruckinformation und die Ausgabe der Information über die dynamische Soll-Phasenlage kann die elektronische Schaltung jeweils digitale (oder analoge) Eingangs- und Ausgangsschnittstellen aufweisen, wie oben ausgeführt.

### Bezugszeichenliste

- AW: Auswahleingang
- dSP1: dynamische Soll-Phasenlage der ersten Nockenwelle (Einlassnockenwelle)
- dSP2: dynamische Soll-Phasenlage der zweiten Nockenwelle (Auslassnockenwelle)
- dSZW: dynamischer Soll-Zündwinkel
- FA: Füllungsabweichung
- IF: Interpolationsfaktor
- kSP1: korrigierte Soll-Phasenlage der ersten Nockenwelle (Einlassnockenwelle)
- kSP2: korrigierte Soll-Phasenlage der zweiten Nockenwelle (Auslassnockenwelle)
- kSZW: korrigierter Soll-Zündwinkel
- KF1: erstes Kennfeld
- KF2: zweites Kennfeld
- KF3: drittes Kennfeld
- KF4: viertes Kennfeld
- KF5: fünftes Kennfeld
- KF6: sechstes Kennfeld
- KF7: siebtes Kennfeld
- KG1: erster Kennfeldgeber
- KG2: zweiter Kennfeldgeber
- KG3: dritter Kennfeldgeber
- KG4: vierter Kennfeldgeber
- KG5: fünfter Kennfeldgeber
- KG6: sechster Kennfeldgeber
- KG7: siebter Kennfeldgeber
- MD: Motordrehzahl
- SD: Saugrohrdruck
- SG: Steuergerät
- sSP1: statische Soll-Phasenlage der ersten Nockenwelle (Einlassnockenwelle)
- sSP2: statische Soll-Phasenlage der zweiten Nockenwelle (Auslassnockenwelle)
- sSZW: statischer Soll-Zündwinkel
- 100: Verfahren zum Steuern einer ersten Nockenwelle einer Verbrennungskraftmaschine
- 101: Ermitteln einer dynamischen Soll-Phasenlage der ersten Nockenwelle
- 102: Ermitteln einer statischen Soll-Phasenlage der ersten Nockenwelle
- 103: Ermitteln einer korrigierten Soll-Phasenlage der ersten Nockenwelle

## Patentansprüche

1. Steuergerät (SG) zum Steuern einer Phasenlage einer ersten Nockenwelle einer Verbrennungskraftmaschine, umfassend:
- einen ersten Kennfeldgeber (KG1) zum Ermitteln einer dynamischen Soll-Phasenlage (dSP1) der ersten Nockenwelle, wobei die dynamische Soll-Phasenlage hinsichtlich einer maximalen Drehmomentabgabe optimiert ist;
- einen zweiten Kennfeldgeber (KG2) zum Ermitteln einer statischen Soll-Phasenlage (sSP1) der ersten Nockenwelle, wobei die statische Soll-Phasenlage hinsichtlich eines optimalen Wirkungsgrades der Verbrennungskraftmaschine optimiert ist; und
- einen ersten Interpolator (IP1) zum Ermitteln einer korrigierten Soll-Phasenlage (kSP1) der ersten Nockenwelle auf Grundlage der von dem ersten Kennfeldgeber (KG1) ermittelten dynamischen Soll-Phasenlage (dSP1) der ersten Nockenwelle und der von dem zweiten Kennfeldgeber (KG2) ermittelten statischen Soll-Phasenlage (sSP1) der ersten Nockenwelle, **dadurch gekennzeichnet, dass** der erste Kennfeldgeber (KG1) dazu eingerichtet ist, den von ihm bereitgestellten Ausgabewert auf Grundlage einer Motordrehzahl (MD) der Verbrennungskraftmaschine und eines Saugrohrdrucks (SD) der Verbrennungskraftmaschine zu ermitteln.

2. Steuergerät (SG) nach Anspruch 1, wobei die korrigierte Soll-Phasenlage (kSP1) der ersten Nockenwelle auf Grundlage einer Drehmomentanforderung ermittelt wird.

3. Steuergerät (SG) nach Anspruch 1 oder 2, wobei der erste Interpolator (IP1) dazu eingerichtet ist, die korrigierte Soll-Phasenlage (kSP1) der ersten Nockenwelle auf Grundlage eines Interpolationsfaktors (IF) zu ermitteln.

4. Steuergerät (SG) nach Anspruch 3, weiter einen dritten Kennfeldgeber (KG3) umfassend, zum Ermitteln des Interpolationsfaktors (IF) auf Grundlage einer Motordrehzahl (MD) der Verbrennungskraftmaschine und/oder einer Füllungsabweichung (FA) eines Zylinders der Verbrennungskraftmaschine.

5. Steuergerät (SG) nach einem der vorhergehenden Ansprüche, weiter umfassend:
- einen vierten Kennfeldgeber (KG4) zum Ermitteln einer dynamischen Soll-Phasenlage (dSP2) einer zweiten Nockenwelle der Verbrennungskraftmaschine;
- einen fünften Kennfeldgeber (KG5) zum Ermitteln einer statischen Soll-Phasenlage (sSP2) der zweiten Nockenwelle; und
- einen zweiten Interpolator (IP2) zum Ermitteln einer korrigierten Soll-Phasenlage (kSP2) der zweiten Nockenwelle auf Grundlage der von dem vierten Kennfeldgeber (KG4) ermittelten dynamischen Soll-Phasenlage (dSP2) der zweiten Nockenwelle und der von dem fünften Kennfeldgeber (KG5) ermittelten statischen Soll-Phasenlage (sSP2) der zweiten Nockenwelle.

6. Steuergerät (SG) nach einem der vorhergehenden Ansprüche, weiter umfassend:
- einen sechsten Kennfeldgeber (KG6) zum Ermitteln eines dynamischen Soll-Zündwinkels (dSZW) der Verbrennungskraftmaschine;
- einen siebten Kennfeldgeber (KG7) zum Ermitteln eines statischen Soll-Zündwinkels (sSZW) der Verbrennungskraftmaschine; und
- einen dritten Interpolator (IP3) zum Ermitteln eines korrigierten Soll-Zündwinkels (kSZW) auf Grundlage des von dem sechsten Kennfeldgeber (KG6) ermittelten dynamischen Soll-Zündwinkels (dSZW) und des dem siebten Kennfeldgeber (KG7) ermittelten statischen Soll-Zündwinkels (sSZW) der Verbrennungskraftmaschine.

7. Steuergerät (SG) nach Anspruch 5 oder 6, wobei der zweite Interpolator (IP2) dazu eingerichtet ist, die korrigierten Soll-Phasenlage (kSP2) der zweiten Nockenwelle auf Grundlage des Interpolationsfaktors (IF) zu ermitteln.

8. Steuergerät (SG) nach einem der Ansprüche 6 bis 7, wobei der dritte Interpolator (IP3) dazu eingerichtet ist, den korrigierten Soll-Zündwinkel (kSZW) auf Grundlage des Interpolationsfaktors (IF) zu ermitteln.

9. Steuergerät (SG) nach einem der vorhergehenden Ansprüche, wobei der zweite (KG2), der vierte (KG4), der fünfte (KG5), der sechste (KG6) und/oder der siebte (KG7) Kennfeldgeber dazu eingerichtet ist, den von ihm jeweils bereitgestellten Ausgabewert auf Grundlage einer Motordrehzahl (MD) der Verbrennungskraftmaschine und/oder eines Saugrohrdrucks (SD) der Verbrennungskraftmaschine zu ermitteln.

10. Steuergerät (SG) nach einem der vorhergehenden Ansprüche, wobei das Steuergerät (SG) dazu eingerichtet ist, den Interpolationsfaktor (IF), ein erstes Kennfeld (KF1) des ersten Kennfeldgebers (KG1), ein zweites Kennfeld (KF2) des zweiten Kennfeldgebers (KG2), ein drittes Kennfeld (KF3) des dritten Kennfeldgebers (KG3), ein viertes Kennfeld (KF4) des vierten Kennfeldgebers (KG4), ein fünftes Kennfeld (KF5) des fünften Kennfeldgebers (KG5), ein sechstes Kennfeld (KF6) des sechsten Kennfeldgebers (KG6) und/oder ein siebtes Kennfeld (KF7) des siebten Kennfeldgebers (KG7) in Abhängigkeit von einem motortyp- und/oder fahrzeugtypabhängigen Parameter auszuwählen.

11. Kraftfahrzeug, das ein Steuergerät (SG) nach einem der Ansprüche 1 bis 10 umfasst.

12. Verfahren (100) zum Steuern einer Phasenlage einer ersten Nockenwelle einer Verbrennungskraftmaschine, wobei das Verfahren (100) die Schritte umfasst:
- Ermitteln (101) einer dynamischen Soll-Phasenlage (dSP1) der ersten Nockenwelle auf Grundlage eines ersten Kennfeldes (KF1), wobei die dynamische Soll-Phasenlage hinsichtlich einer maximalen Drehmomentabgabe optimiert ist;
- Ermitteln (102) einer statischen Soll-Phasenlage (sSP1) der ersten Nockwelle auf Grundlage eines zweiten Kennfeldes (KF2), wobei die statische Soll-Phasenlage hinsichtlich eines optimalen Wirkungsgrades der Verbrennungskraftmaschine optimiert ist; und
- Ermitteln (103) einer korrigierten Soll-Phasenlage (kSP1) der ersten Nockenwelle auf Grundlage einer Interpolation zwischen der ermittelten dynamischen Soll-Phasenlage (dSP1) der ersten Nockenwelle und der ermittelten statischen Soll-Phasenlage (sSP1) der ersten Nockenwelle, wobei der bereitgestellte Ausgabewert auf Grundlage einer Motordrehzahl (MD) der Verbrennungskraftmaschine und eines Saugrohrdrucks (SD) der Verbrennungskraftmaschine ermittelt wird.

## Claims

1. Control unit (SG) for controlling a phase angle of a first camshaft of an internal combustion engine, comprising:
- a first characteristic diagram signal generator (KG1) for determining a dynamic setpoint phase angle (dSP1) of the first camshaft, wherein the dynamic setpoint phase angle is optimized with respect to a maximum torque output;
- a second characteristic diagram signal generator (KG2) for determining a static setpoint phase angle (sSP1) of the first camshaft, wherein the static setpoint phase angle is optimized with respect to an optimum efficiency level of the internal combustion engine; and
- a first interpolator (IP1) for determining a corrected setpoint phase angle (kSP1) of the first camshaft on the basis of the dynamic setpoint phase angle (dSP1), determined by the first characteristic diagram signal generator (KG1), of the first camshaft and of the static setpoint phase angle (sSP1), determined by the second characteristic diagram signal generator (KG2), of the first camshaft, **characterized in that** the first characteristic diagram signal generator (KG1) is configured to determine the output value made available by it, on the basis of an engine rotational speed (MD) of the internal combustion engine and of an intake manifold pressure (SD) of the internal combustion engine.

2. Control unit (SG) according to Claim 1, wherein the corrected setpoint phase angle (kSP1) of the first camshaft is determined on the basis of a torque request.

3. Control unit (SG) according to Claim 1 or 2, wherein the first interpolator (IP1) is configured to determine the corrected setpoint phase angle (kSP1) of the first camshaft on the basis of an interpolation factor (IF).

4. Control unit (SG) according to Claim 3, also comprising a third characteristic diagram signal generator (KG3) for determining the interpolation factor (IF) on the basis of an engine rotational speed (MD) of the internal combustion engine and/or a charge deviation (FA) of a cylinder of the internal combustion engine.

5. Control unit (SG) according to one of the preceding claims, also comprising:
- a fourth characteristic diagram signal generator (KG4) for determining a dynamic setpoint phase angle (dSP2) of a second camshaft of the internal combustion engine;
- a fifth characteristic diagram signal generator (KG5) for determining a static setpoint phase angle (sSP2) of the second camshaft; and
- a second interpolator (IP2) for determining a corrected setpoint phase angle (kSP2) of the second camshaft on the basis of the dynamic setpoint phase angle (dSP2), determined by the fourth characteristic diagram signal generator (KG4), of the second camshaft and of the static setpoint phase angle (sSP2), determined by the fifth characteristic diagram signal generator (KG5), of the second camshaft.

6. Control unit (SG) according to one of the preceding claims also comprising:
- a sixth characteristic diagram signal generator (KG6) for determining a dynamic setpoint ignition angle (dSZW) of the internal combustion engine;
- a seventh characteristic diagram signal generator (KG7) for determining a static setpoint ignition angle (sSZW) of the internal combustion engine; and
- a third interpolator (IP3) for determining a corrected setpoint ignition angle (kSZW) on the basis of the dynamic setpoint ignition angle (dSZW) determined by the sixth characteristic diagram signal generator (KG6) and of the static setpoint ignition angle (sSZW), determined by the seventh characteristic diagram signal generator (KG7), of the internal combustion engine.

7. Control unit (SG) according to Claim 5 or 6, wherein the second interpolator (IP2) is configured to determine the corrected setpoint phase angle (kSP2) of the second camshaft on the basis of the interpolation factor (IF).

8. Control unit (SG) according to one of Claims 6 to 7, wherein the third interpolator (IP3) is configured to determine the corrected setpoint ignition angle (kSZW) on the basis of the interpolation factor (IF).

9. Control unit (SG) according to one of the preceding claims, wherein the second characteristic diagram signal generator (KG2), the fourth characteristic diagram signal generator (KG4), the fifth characteristic diagram signal generator (KG5), the sixth characteristic diagram signal generator (KG6) and/or the seventh characteristic diagram signal generator (KG7) are/is configured to determine the output value respectively made available by it, on the basis of an engine rotational speed (MD) of the internal combustion engine and/or of an intake manifold pressure (SD) of the internal combustion engine.

10. Control unit (SG) according to one of the preceding claims, wherein the control unit (SG) is configured to select the interpolation factor (IF), a first characteristic diagram (KF1) of the first characteristic diagram signal generator (KG1), a second characteristic diagram (KF2) of the second characteristic diagram signal generator (KG2), a third characteristic diagram (KF3) of the third characteristic diagram signal generator (KG3), a fourth characteristic diagram (KF4) of the fourth characteristic diagram signal generator (KG4), a fifth characteristic diagram (KF5) of the fifth characteristic diagram signal generator (KG5), a sixth characteristic diagram (KF6) of the sixth characteristic diagram signal generator (KG6) and/or a seventh characteristic diagram (KF7) of the seventh characteristic diagram signal generator (KG7) as a function of an engine-type-dependent and/or vehicle-type-dependent parameter.

11. Motor vehicle which comprises a control unit (SG) according to one of Claims 1 to 10.

12. Method (100) for controlling a phase angle of a first camshaft of an internal combustion engine, wherein the method (100) comprises the steps:
- determining (101) a dynamic setpoint phase angle (dSP1) of the first camshaft on the basis of a first characteristic diagram (KF1), wherein the dynamic setpoint phase angle is optimized with respect to a maximum torque output;
- determining (102) a static setpoint phase angle (sSP1) of the first camshaft on the basis of a second characteristic diagram (KF2), wherein the static setpoint phase angle is optimized with respect to an optimum efficiency level of the internal combustion engine; and
- determining (103) a corrected setpoint phase angle (kSP1) of the first camshaft on the basis of an interpolation between the determined dynamic setpoint phase angle (dSP1) of the first camshaft and the determined static setpoint phase angle (sSP1) of the first camshaft, wherein the output value made available is determined on the basis of an engine rotational speed (MD) of the internal combustion engine and of an intake manifold pressure (SD) of the internal combustion engine.

## Revendications

1. Appareil de commande (SG) destiné à commander une position de phase d'un premier arbre à cames d'un moteur à combustion interne, comprenant
- un premier générateur de diagramme caractéristique (KG1) destiné à déterminer une position de phase nominale dynamique (dSP1) du premier arbre à cames, dans lequel la position de phase nominale dynamique est optimisée en ce qui concerne un couple maximal délivré ;
- un deuxième générateur de diagramme caractéristique (KG2) destiné à déterminer une position de phase nominale statique (sSP1) du premier arbre à cames, dans lequel la position de phase nominale statique est optimisée en ce qui concerne un rendement optimal du moteur à combustion interne ; et
- un premier interpolateur (IP1) destiné à déterminer une position de phase nominale corrigée (kSP1) du premier arbre à cames sur la base de la position de phase nominale dynamique (dSP1) du premier arbre à cames, déterminée par le premier générateur de diagramme caractéristique (KG1) et de la position de phase nominale statique (sSP1) du premier arbre à cames, déterminée par le deuxième générateur de diagramme caractéristique (KG2), **caractérisé en ce que** le premier générateur de diagramme caractéristique (KG1) est conçu pour déterminer la valeur de sortie qu'il fournit sur la base d'une vitesse de rotation de moteur (MD) du moteur à combustion interne et d'une pression de tubulure d'admission (SD) du moteur à combustion interne.

2. Appareil de commande (SG) selon la revendication 1, dans lequel la position de phase nominale corrigée (kSP1) du premier arbre à cames est déterminée sur la base d'une demande de couple.

3. Appareil de commande (SG) selon la revendication 1 ou 2, dans lequel le premier interpolateur (IP1) est conçu pour déterminer la position de phase nominale corrigée (kSP1) du premier arbre à cames sur la base d'un facteur d'interpolation (IF).

4. Appareil de commande (SG) selon la revendication 3, comprenant en outre un troisième générateur de diagramme caractéristique (KG3), destiné à déterminer le facteur d'interpolation (IF) sur la base d'une vitesse de rotation de moteur (MD) du moteur à combustion interne et/ou d'un écart de remplissage (FA) d'un cylindre du moteur à combustion interne.

5. Appareil de commande (SG) selon l'une des revendications précédentes, comprenant en outre :
- un quatrième générateur de diagramme caractéristique (KG4) destiné à déterminer une position de phase nominale dynamique (dSP2) d'un deuxième arbre à cames du moteur à combustion interne ;
- un cinquième générateur de diagramme caractéristique (KG5) destiné à déterminer une position de phase nominale statique (sSP2) du deuxième arbre à cames ; et
- un deuxième interpolateur (IP2) destiné à déterminer une position de phase nominale corrigée (kSP2) du deuxième arbre à cames sur la base de la position de phase nominale dynamique (dSP2) du deuxième arbre à cames, déterminé par le quatrième générateur de diagramme caractéristique (KG4), et de la position de phase nominale statique (sSP2) du deuxième arbre à cames, déterminée par le cinquième générateur de diagramme caractéristique (KG5).

6. Appareil de commande (SG) selon l'une des revendications précédentes, comprenant en outre :
- un sixième générateur de diagramme caractéristique (KG6) destiné à déterminer un angle d'allumage nominal dynamique (dSZW) du moteur à combustion interne ;
- un septième générateur de diagramme caractéristique (KG7) destiné à déterminer un angle d'allumage nominal statique (sSZW) du moteur à combustion interne ; et
- un troisième interpolateur (IP3) destiné à déterminer un angle d'allumage nominal corrigé (kSZW) sur la base de l'angle d'allumage nominal dynamique (dSZW) déterminé par le sixième générateur de diagramme caractéristique (KG6) et de l'angle d'allumage nominal statique (sSZW) du moteur à combustion interne, déterminé par le septième générateur de diagramme caractéristique (KG7).

7. Appareil de commande (SG) selon la revendication 5 ou 6, dans lequel le deuxième interpolateur (IP2) est conçu pour déterminer la position de phase nominale corrigée (kSP2) du deuxième arbre à cames sur la base du facteur d'interpolation (IF).

8. Appareil de commande (SG) selon l'une des revendications 6 à 7, dans lequel le troisième interpolateur (IP3) est conçu pour déterminer l'angle d'allumage nominal corrigé (kSZW) sur la base du facteur d'interpolation (IF).

9. Appareil de commande (SG) selon l'une des revendications précédentes, dans lequel le deuxième (KG2), le quatrième (KG4), le cinquième (KG5), le sixième (KG6) et/ou le septième (KG7) générateur de diagramme caractéristique est/sont conçu(s) pour déterminer la valeur de sortie respectivement fournie par celui-ci sur la base d'une vitesse de rotation de moteur (MD) du moteur à combustion interne et/ou d'une pression de tubulure d'admission (SD) du moteur à combustion interne.

10. Appareil de commande (SG) selon l'une des revendications précédentes, dans lequel l'appareil de commande (SG) est conçu pour sélectionner le facteur d'interpolation (IF), un premier diagramme caractéristique (KF1) du premier générateur de diagramme caractéristique (KG1), un deuxième diagramme caractéristique (KF2) du deuxième générateur de diagramme caractéristique (KG2), un troisième diagramme caractéristique (KF3) du troisième générateur de diagramme caractéristique (KG3), un quatrième diagramme caractéristique (KF4) du quatrième générateur de diagramme caractéristique (KG4), un cinquième diagramme caractéristique (KF5) du cinquième générateur de diagramme caractéristique (KG5), un sixième diagramme caractéristique (KF6) du sixième générateur de diagramme caractéristique (KG6), et/ou un septième générateur de diagramme caractéristique (KF7) du septième générateur de diagramme caractéristique (KG7) en fonction d'un paramètre dépendant du type de moteur et/ou du type de véhicule.

11. Véhicule automobile comprenant un appareil de commande (SG) selon l'une des revendications 1 à 10.

12. Procédé (100) destiné à commander une position de phase d'un premier arbre à cames d'un moteur à combustion interne, dans lequel le procédé (100) comprend les étapes consistant à :
- déterminer (101) une position de phase nominale dynamique (dSP1) du premier arbre à cames sur la base d'un premier diagramme caractéristique (KF1), dans lequel la position de phase nominale dynamique est optimisée en ce qui concerne un couple maximal délivré ;
- déterminer (102) une position de phase nominale statique (sSP1) du premier arbre à cames sur la base d'un deuxième diagramme caractéristique (KF2), dans lequel la position de phase nominale statique est optimisée en ce qui concerne un rendement optimal du moteur à combustion interne ; et
- déterminer (103) une position de phase nominale corrigée (kSP1) du premier arbre à cames sur la base d'une interpolation entre la position de phase nominale dynamique (dSP1) déterminée du premier arbre à cames et de la position de phase nominale statique (sSP1) déterminée du premier arbre à cames, dans lequel la valeur de sortie fournie est déterminée sur la base d'une vitesse de rotation de moteur (MD) du moteur à combustion interne et d'une pression de tubulure d'admission (SD) du moteur à combustion interne.
